# EUROPEAN PATENT APPLICATION

(11) **EP 4 191 040 A1**
(43) Date of publication of application: **07.06.2023**
(21) Application number: 22211815.0
(22) Date of filing: 06.12.2022
(51) Int. Cl.: F02C 7/24, F02K 1/82

(54) **MULTI-CORE ACOUSTIC PANEL FOR AN AIRCRAFT PROPULSION SYSTEM**

(30) Priority: 06.12.2021 US 202117542861
(71) Applicant: Rohr, Inc., Chula Vista, CA 91910-2098 (US)
(72) Inventor: STRUTT, Andrew J., San Diego, 92122 (US)
(74) Representative: Dehns

(57) **Abstract**

An aircraft propulsion system (20) apparatus includes a first skin (82), a second skin (83), an intermediate layer (84) between the first skin (82) and the second skin (83), a first cellular core (85) and a second cellular core (86). The first cellular core (85) is connected to the first skin (82) and the intermediate layer (84). The first cellular core (85) includes a plurality of first core chambers (96), where a first of the first core chambers (96) is fluidly coupled with one or more first perforations (88) in the first skin (82) and one or more first perforations (94) in the intermediate layer (84). The second cellular core (86) is connected to the intermediate layer (84) and the second skin (83). The second cellular core (86) includes a plurality of second core chambers (104) and a plurality of corrugations (106), where a first of the second core chambers (104) is fluidly coupled with the first of the first core chambers (96) through the one or more first perforations (94) in the intermediate layer (84).

## Description

### BACKGROUND

### 1. Technical Field

This disclosure (invention) relates generally to an aircraft propulsion system and, more particularly, to sound attenuation for the aircraft propulsion system.

### 2. Background Information

An aircraft propulsion system directs combustion products out of an exhaust nozzle. Sound waves (e.g., noise) generated during propulsion system operation may travel with the combustion products out through the exhaust nozzle. Some exhaust nozzles are configured with structures for attenuating these sound waves. While known sound attenuating structures have various advantages, there is still room in the art for improvement. In particular, there is a need in the art for sound attenuation structures for an exhaust nozzle (as well as other structures) capable of attenuating low frequency sound waves while maintaining structural integrity.

### SUMMARY OF THE DISCLOSURE

According to an aspect of the present invention, an apparatus is provided for an aircraft propulsion system. This apparatus includes a first skin, a second skin, an intermediate layer, a first cellular core and a second cellular core. The intermediate layer is between the first skin and the second skin. The first cellular core is between and connected to the first skin and the intermediate layer. The first cellular core includes a plurality of first core chambers. A first of the first core chambers is fluidly coupled with one or more first perforations in the first skin and one or more first perforations in the intermediate layer. The second cellular core is between and connected to the intermediate layer and the second skin. The second cellular core includes a plurality of second core chambers and a plurality of corrugations. A first of the second core chambers is fluidly coupled with the first of the first core chambers through the one or more first perforations in the intermediate layer. A first of the corrugations include a first panel and a second panel. The first of the corrugations is connected to the second skin at an interface between the first panel and the second panel. The first panel is connected to the intermediate layer at a first location. The second panel is connected to the intermediate layer at a second location.

According to another aspect of the present invention, another apparatus is provided for an aircraft propulsion system. This apparatus includes a first skin, a second skin, an intermediate layer, a first cellular core and a second cellular core. The intermediate layer is between the first skin and the second skin. The first cellular core is between and connected to the first skin and the intermediate layer. The first cellular core includes a plurality of first core chambers. A first of the first core chambers is fluidly coupled with one or more first perforations in the first skin and one or more first perforations in the intermediate layer. The first of the first core chambers is configured with a first chamber shape in a first chamber reference plane. The second cellular core is between and connected to the intermediate layer and the second skin. The second cellular core includes a plurality of second core chambers. A first of the second core chambers is fluidly coupled with the first of first core chambers through the one or more first perforations in the intermediate layer. The first of the second core chambers is configured with a second chamber shape in a second chamber reference plane that is parallel with the first chamber reference plane. The second chamber shape is different than the first chamber shape.

According to still another aspect of the present invention, another apparatus is provided for an aircraft propulsion system. This apparatus includes an exhaust nozzle extending circumferentially about and axially along an axial centerline. The exhaust nozzle includes an inner skin, an outer skin, an intermediate layer, a first cellular core and a second cellular core. The first cellular core is radially between and connected to the inner skin and the intermediate layer. The first cellular core includes a first core configuration with a plurality of first core chambers. A first of the first core chambers is fluidly coupled with one or more first perforations in the inner skin and one or more first perforations in the intermediate layer. The second cellular core is radially between and connected to the intermediate layer and the outer skin. The second cellular core includes a second core configuration with a plurality of second core chambers. The second core configuration is different than the first core configuration. A first of the second core chambers is fluidly coupled with the first of the first core chambers through the one or more first perforations in the intermediate layer.

The following optional features may be applied to any of the above aspects.

The second cellular core may also include a plurality of corrugations. A first of the corrugations may include a first panel and a second panel. The first of the corrugations may be connected to the second skin at an interface between the first panel and the second panel. The first panel may be connected to the intermediate layer at a first location. The second panel may be connected to the intermediate layer at a second location that is spaced from the first location.

The first panel may be angularly offset from the second skin by an acute angle. The second panel may be angularly offset from the first panel at the interface by an acute angle.

The second panel may be angularly offset from the second skin by a right angle.

The first panel may be configured as a non-perforated panel. The second panel may be configured as a non-perforated panel.

The first panel may be configured as a non-perforated panel. The second panel may be configured as a perforated panel.

The first of the second core chambers may extend between the intermediate layer and the second panel.

The second panel may extend across and may divide the first of the second core chambers into a pair of fluidly coupled sub-chambers.

A second of the first core chambers may be fluidly coupled with one or more second perforations in the first skin and one or more second perforations in the intermediate layer. The first of the second core chambers may be fluidly coupled with the second of the first core chambers through the one or more second perforations in the intermediate layer.

A third of the first core chambers may be fluidly coupled with one or more third perforations in the first skin and one or more third perforations in the intermediate layer. The first of the second core chambers may be fluidly coupled with the third of the first core chambers through the one or more third perforations in the intermediate layer.

The first cellular core may be configured as or otherwise include a honeycomb core.

The first of the first core chambers may be configured with a first chamber sectional geometry in a first chamber reference plane. The first of the second core chambers may be configured with a second chamber sectional geometry in a second chamber reference plane that is parallel with the first chamber reference plane. The second chamber sectional geometry may be different than the first chamber sectional geometry.

The first chamber sectional geometry may have a rectangular shape. The second chamber sectional geometry may have a triangular shape.

The first chamber sectional geometry may have a rectangular shape. The second chamber sectional geometry may have a parallelogram shape.

The first chamber sectional geometry may have a hexagonal shape. The second chamber sectional geometry may have a rectangular shape.

The apparatus may include an acoustic panel. This acoustic panel may include the first skin, the second skin, the intermediate layer, the first cellular core and the second cellular core. The acoustic panel may extend circumferentially about an axial centerline. The first skin may form a radial inner surface of the acoustic panel.

The apparatus may also include an exhaust nozzle. This exhaust nozzle may include the first skin, the second skin, the intermediate layer, the first cellular core and the second cellular core.

The apparatus may also include a fairing extending circumferentially about and axially overlapping the second skin.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of an aircraft propulsion system.
FIG. 2 is a partial sectional illustration of an exhaust nozzle for the aircraft propulsion system.
FIG. 3 is a partial sectional illustration of an acoustic panel for the exhaust nozzle configured with baffle and septum panels.
FIG. 4 is a partial illustration of an inner cellular core for the acoustic panel.
FIG. 5 is a partial sectional illustration of the acoustic panel taken along line 5-5 in FIG. 3.
FIG. 6 is a partial perspective illustration of an outer cellular core for the acoustic panel, which core is shown without perforations for ease of illustration.
FIG. 7 is a partial sectional illustration of the acoustic panel configured with baffle panels.
FIG. 8 is a partial perspective illustration of a corrugated ribbon for the outer cellular core, which ribbon is shown without perforations for ease of illustration.
FIG. 9 is a partial sectional illustration of the acoustic panel depicted with select sound wave trajectories.
FIG. 10 is a partial sectional illustration of certain exhaust nozzle components arranged with a mandrel.
FIG. 11 is a partial sectional illustration of a skin with a deformed region between core supports.

### DETAILED DESCRIPTION

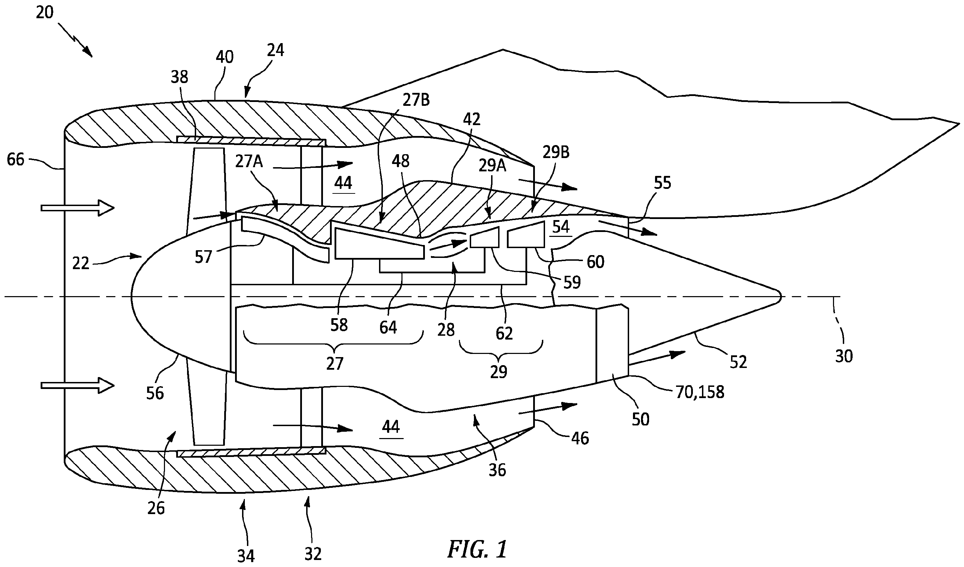

FIG. 1 illustrates an aircraft propulsion system 20 for an aircraft such as, but not limited to, a commercial airliner or cargo plane. The aircraft propulsion system 20 includes a gas turbine engine 22 and a nacelle 24.

The gas turbine engine 22 may be configured as a high-bypass turbofan engine. The gas turbine engine 22 of FIG. 1, for example, includes a fan section 26, a compressor section 27, a combustor section 28 and a turbine section 29. The compressor section 27 may include a low pressure compressor (LPC) section 27A and a high pressure compressor (HPC) section 27B. The turbine section 29 may include a high pressure turbine (HPT) section 29A and a low pressure turbine (LPT) section 29B.

The engine sections 26-29B are arranged sequentially along an axial centerline 30 (e.g., a rotational axis) of the gas turbine engine 22 within an aircraft propulsion system housing 32. This housing 32 includes an outer housing structure 34 and an inner housing structure 36.

The outer housing structure 34 includes an outer case 38 (e.g., a fan case) and an outer structure 40 of the nacelle 24; i.e., an outer nacelle structure. The outer case 38 houses at least the fan section 26. The outer nacelle structure 40 houses and provides an aerodynamic cover the outer case 38. The outer nacelle structure 40 also covers a portion of an inner structure 42 of the nacelle 24; i.e., an inner nacelle structure, which may also be referred to as an inner fixed structure. More particularly, the outer nacelle structure 40 axially overlaps and extends circumferentially about (e.g., completely around) the inner nacelle structure 42. The outer nacelle structure 40 and the inner nacelle structure 42 thereby at least partially or completely form a bypass flowpath 44. This bypass flow path 44 extends axially along the axial centerline 30 within the aircraft propulsion system 20 to a bypass nozzle outlet 46, where the bypass flowpath 44 is radially between the nacelle structures 34 and 36.

The inner housing structure 36 includes an inner case 48 (e.g., a core case) and the inner nacelle structure 42. The inner case 48 houses one or more of the engine sections 27A-29B, which engine sections 27A-29B may be collectively referred to as an engine core. The inner nacelle structure 42 houses and provides an aerodynamic cover for the inner case 48. A downstream / aft portion of the inner housing structure 36 such as, for example, a core exhaust nozzle 50 of the inner nacelle structure 42 also covers at least a portion of an exhaust center body 52. More particularly, the inner nacelle structure 42 and its exhaust nozzle 50 axially overlap and extend circumferentially about (e.g., completely around) the exhaust center body 52. The exhaust nozzle 50 and the exhaust center body 52 thereby collectively form a downstream / aft portion of a core flowpath 54. This core flowpath 54 extends axially within the aircraft propulsion system 20, through the engine sections 27A-29B (e.g., the engine core), to a core exhaust nozzle outlet 55 at a downstream / aft end of the aircraft propulsion system 20.

Each of the engine sections 26, 27A, 27B, 29A and 29B of FIG. 1 includes a respective rotor 56-60. Each of these rotors 56-60 includes a plurality of rotor blades arranged circumferentially around and connected to one or more respective rotor disks.

The fan rotor 56 and the LPC rotor 57 are connected to and driven by the LPT rotor 60 through a low speed shaft 62. The HPC rotor 58 is connected to and driven by the HPT rotor 59 through a high speed shaft 64. The shafts 62 and 64 are rotatably supported by a plurality of bearings (not shown). Each of these bearings is connected to the aircraft propulsion system housing 32 by at least one stationary structure such as, for example, an annular support strut.

During operation, air enters the aircraft propulsion system 20 through an airflow inlet 66. This air is directed through the fan section 26 and into the core flowpath 54 and the bypass flowpath 44. The air within the core flowpath 54 may be referred to as "core air". The air within the bypass flowpath 44 may be referred to as "bypass air".

The core air is compressed by the compressor rotors 57 and 58 and directed into a combustion chamber of a combustor in the combustor section 28. Fuel is injected into the combustion chamber and mixed with the compressed core air to provide a fuel-air mixture. This fuel air mixture is ignited and combustion products thereof flow through and sequentially cause the turbine rotors 59 and 60 to rotate. The rotation of the turbine rotors 59 and 60 respectively drive rotation of the compressor rotors 58 and 57 and, thus, compression of the air received from a core airflow inlet. The rotation of the turbine rotor 60 also drives rotation of the fan rotor 56, which propels bypass air through and out of the bypass flowpath 44. The propulsion of the bypass air may account for a majority of thrust generated by the turbine engine 22, e.g., more than seventy-five percent (75%) of engine thrust. The aircraft propulsion system 20 of the present disclosure, however, is not limited to the foregoing exemplary thrust ratio. Furthermore, the aircraft propulsion system 20 of the present disclosure is not limited to the exemplary gas turbine engine configuration described above as discussed below in further detail.

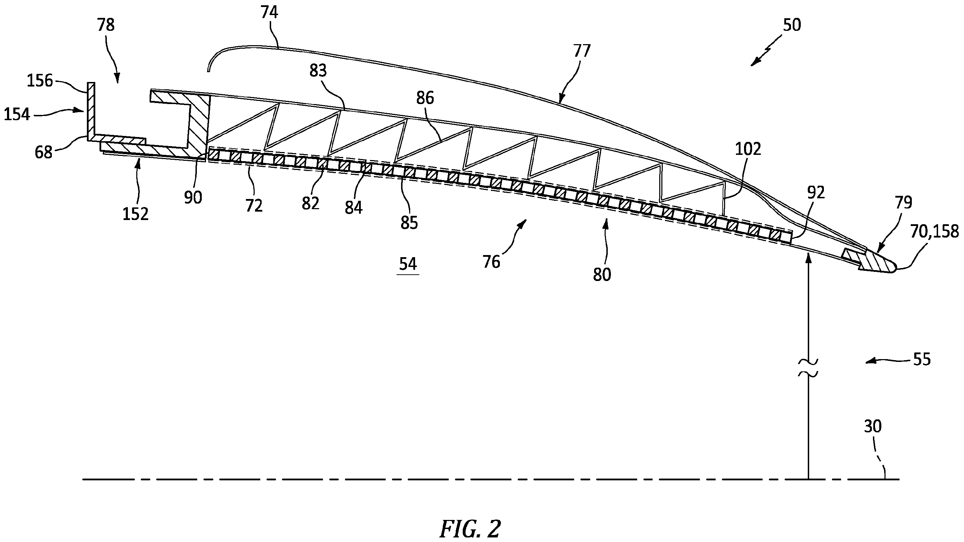

Referring to FIG. 2, the exhaust nozzle 50 extends axially along the axial centerline 30 between a forward, upstream end 68 of the exhaust nozzle 50 and an aft, downstream end 70 of the exhaust nozzle 50. The exhaust nozzle 50 extends circumferentially about (e.g., completely around) the axial centerline 30, which may provide the exhaust nozzle 50 with a full-hoop, tubular body. The exhaust nozzle 50 extends radially between and to a radial inner surface 72 of the exhaust nozzle 50 and a radial outer surface 74 of the exhaust nozzle 50. The nozzle inner surface 72 forms an outer peripheral boundary of the core flowpath 54. The nozzle outer surface 74 forms an inner peripheral boundary for the bypass air directed out of the bypass flowpath 44 of FIG. 1 through the bypass nozzle outlet 46. The exhaust nozzle 50 of FIG. 2 includes an exhaust nozzle inner structure 76, an exhaust nozzle fairing 77, an exhaust nozzle mounting structure 78 and an exhaust nozzle trailing edge body 79.

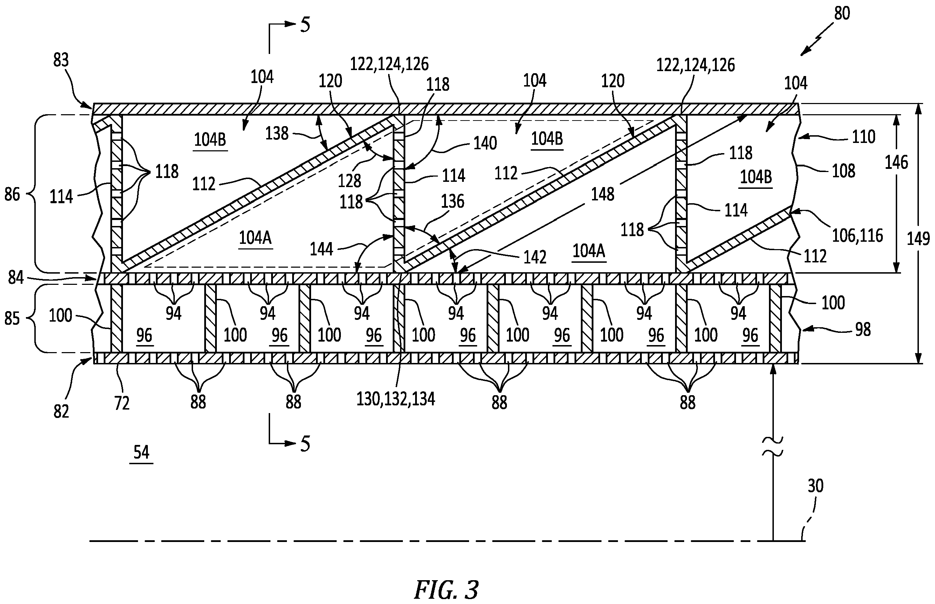

The nozzle inner structure 76 is configured as or otherwise includes a multi-core structural, acoustic panel 80. This acoustic panel 80 is configured to attenuate noise generated by the aircraft propulsion system 20 that propagates downstream with the combustion products through the core flowpath 54; see FIG. 1. The acoustic panel 80 FIG. 3 includes a fluid permeable (e.g., perforated) radial inner skin 82, a fluid impermeable (e.g., non-perforated) radial outer skin 83, a fluid permeable (e.g., perforated) intermediate layer 84 (e.g., a septum), a radial inner cellular core 85 and a radial outer cellular core 86.

The inner skin 82 is configured as a face and/or an exterior skin of the acoustic panel 80. The inner skin 82, for example, may be formed from a relatively thin sheet or layer of material; e.g., sheet metal. This inner skin 82 of FIG. 2 extends axially along the axial centerline 30 between and to (or about) the nozzle upstream end 68 and the nozzle downstream end 70. The inner skin 82 extends circumferentially about (e.g., completely around) the axial centerline 30. The inner skin 82 of FIG. 3 forms at least a portion or an entirety of the nozzle inner surface 72; see also FIG. 2. The inner skin 82 includes a plurality of inner skin perforations 88; e.g., apertures such as through-holes. Each of these inner skin perforations 88 extends through the inner skin 82.

The outer skin 83 is configured as a back and/or interior skin of the acoustic panel 80. The outer skin 83, for example, may be formed from a relatively thin sheet or layer of (e.g., continuous, uninterrupted and/or non-porous) material; e.g., sheet metal. This outer skin 83 of FIG. 2 extends axially along the axial centerline 30 between and to (or about) the nozzle upstream end 68 and the nozzle downstream end 70. The outer skin 83 extends circumferentially about (e.g., completely around) the axial centerline 30 and circumscribes each of the acoustic panel elements 82 and 84-86. The outer skin 83 of FIG. 3 is configured as a continuous, uninterrupted and/or non-porous skin; e.g., a skin without and perforations aligned with the outer cellular core 86.

The intermediate layer 84 is configured as an intra-core septum for the acoustic panel 80. The intermediate layer 84, for example, may be formed from a relatively thin sheet or layer of material; e.g., sheet metal. This intermediate layer 84 of FIG. 2 extends axially along the axial centerline 30 between and to a forward, upstream end 90 of the acoustic panel 80 and an aft, downstream end 92 of the acoustic panel 80, where the panel upstream end 90 of FIG. 2 is axially recessed (in a downstream, aft direction) from the nozzle upstream end 68, and where the panel downstream end 92 of FIG. 2 is axially recessed (in an upstream, forward direction) from the nozzle downstream end 70. The intermediate layer 84 extends circumferentially about (e.g., completely around) the axial centerline 30. The intermediate layer 84 of FIG. 3 includes a plurality of intermediate layer perforations 94; e.g., apertures such as through-holes. Each of these intermediate layer perforations 94 extends through the intermediate layer 84.

The inner cellular core 85 of FIG. 2 extends axially along the axial centerline 30 between and to the panel upstream end 90 and the panel downstream end 92. The inner cellular core 85 extends circumferentially about (e.g., completely around) the axial centerline 30. The inner cellular core 85 is arranged radially between the inner skin 82 and the intermediate layer 84. The inner cellular core 85 of FIG. 3, more particularly, extends radially between and to the inner skin 82 and the intermediate layer 84. The inner cellular core 85 may be connected (e.g., welded, brazed and/or otherwise bonded) to the inner skin 82 and/or the intermediate layer 84.

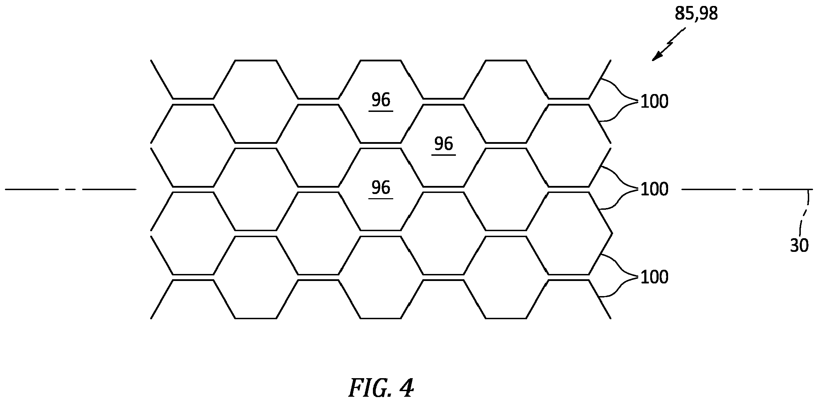

The inner cellular core 85 is configured to form one or more internal inner core chambers 96 (e.g., acoustic resonance chambers, cavities, etc.) radially between the inner skin 82 and the intermediate layer 84. The inner cellular core 85 of FIG. 3, for example, includes an inner cellular core structure 98. This inner cellular core structure 98 may be configured as a honeycomb core structure. The inner cellular core structure 98 of FIG. 4, for example, includes a plurality of corrugated sidewalls 100. These corrugated sidewalls 100 are arranged in a side-by-side array and are connected to one another such that each adjacent (e.g., neighboring) pair of the corrugated sidewalls 100 forms an array of the inner core chambers 96 laterally therebetween. The inner cellular core structure 98 and its corrugated sidewalls 100 are constructed from or otherwise include core material such as metal; e.g., sheet metal.

Each of the inner core chambers 96 of FIG. 3 extends radially within / through the inner cellular core 85 between and to the inner skin 82 and the intermediate layer 84. One or more or all of the inner core chambers 96 may thereby each be fluidly coupled with a respective set of one or more of the inner skin perforations 88 and a respective set of one or more of the intermediate layer perforations 94.

Each of the inner core chambers 96 has a first inner core chamber sectional geometry (e.g., shape, size, etc.) when viewed in a first inner core chamber reference plane; e.g., the plane of FIG. 3. This first inner core chamber sectional geometry may have a polygonal shape; e.g., a rectangular shape. Referring to FIG. 4, each of the inner core chambers 96 has a second inner core chamber sectional geometry (e.g., shape, size, etc.) when viewed in a second inner core chamber reference plane; e.g., the plane of FIG. 4. This second inner core chamber sectional geometry may have a polygonal shape; e.g., a hexagonal shape. The present disclosure, however, is not limited to foregoing exemplary inner cellular core configuration. For example, one or more or all of the inner core chambers 96 may each have a circular, elliptical or other non-polygonal cross-sectional geometry. Furthermore, various other types of honeycomb cores and, more generally, various other types of cellular cores for an acoustic panel 80 are known in the art, and the present disclosure is not limited to any particular ones thereof.

The outer cellular core 86 of FIG. 2 extends axially along the axial centerline 30 between and to (or about) the panel upstream end 90 and the panel downstream end 92. More particularly, the outer cellular core 86 of FIG. 2 extends axially to a recessed aft, downstream end 102 of the acoustic panel 80 which is axially recessed (in the upstream, forward direction) from panel downstream end 92. The outer cellular core 86 extends circumferentially about (e.g., completely around) the axial centerline 30. The outer cellular core 86 is arranged radially between the intermediate layer 84 and the outer skin 83. The outer cellular core 86 of FIG. 3, more particularly, extends radially between and to the intermediate layer 84 and the outer skin 83. The outer cellular core 86 may be connected (e.g., welded, brazed and/or otherwise bonded) to the intermediate layer 84 and/or the outer skin 83.

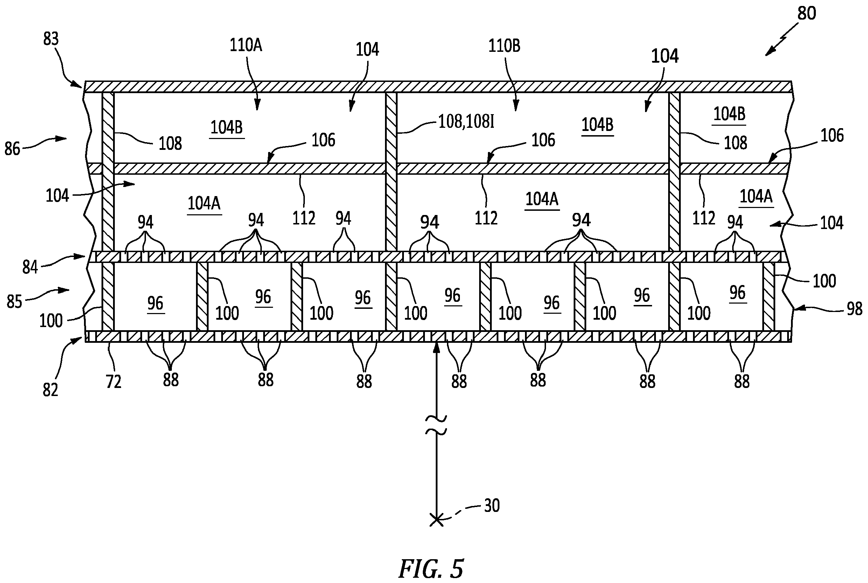

The outer cellular core 86 is configured to form one or more internal outer core chambers 104 (e.g., acoustic resonance chambers, cavities, etc.) radially between the intermediate layer 84 and the outer skin 83. Each of these outer core chambers 104 may extend radially within / through the outer cellular core 86 between and to the intermediate layer 84 and the outer skin 83. One or more or all of the outer core chambers 104 may thereby each be fluidly coupled with a respective set of one or more of the intermediate layer perforations 94. Thus, one or more or all of the outer core chambers 104 may be fluidly coupled with a respective set of one or more of the inner core chambers 96 through the respective intermediate layer perforations 94. However, while each outer core chamber 104 of FIG. 3 may be fluidly coupled with multiple inner core chambers 96, each inner core chamber 96 may only be fluidly coupled with a single one of the outer core chambers 104. For example, while each outer core chamber 104 may axially (see FIG. 3) and/or circumferentially (see FIG. 5) overlap multiple inner core chambers 96, each inner core chamber 96 may only axially (see FIG. 3) and/or circumferentially (see FIG. 5) overlap a single one of the outer core chambers 104. The present disclosure, however, is not limited to such an exemplary relationship between the inner and the outer cellular cores 85 and 86.

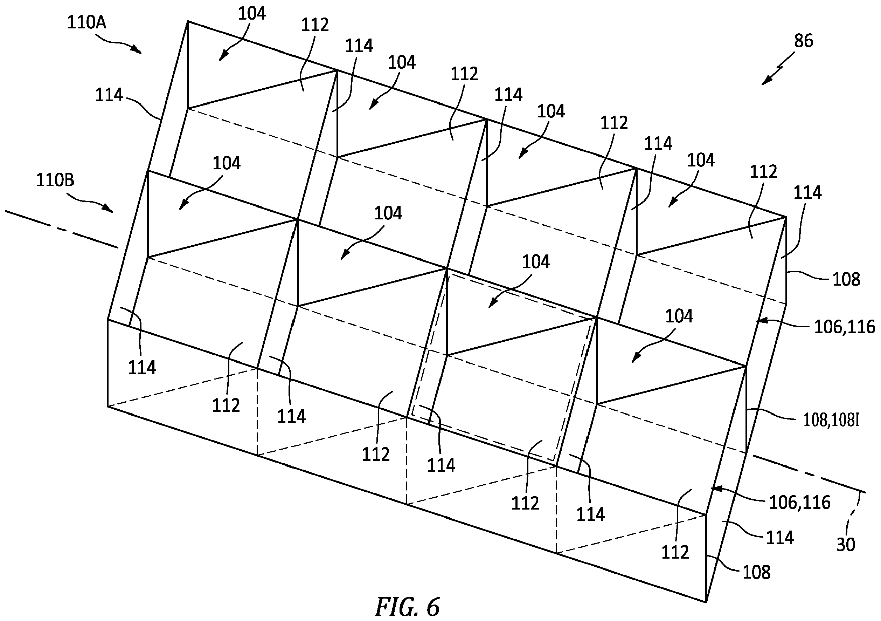

Referring to FIGS. 3, 5 and 6, the outer cellular core 86 includes one or more corrugated structures 106 and one or more (e.g., planar) chamber sidewalls 108. These outer core components 106 and 108 are arranged together to provide the outer core chambers 104. The outer core chambers 104 of FIG. 6 are arranged in one or more linear chamber arrays 110A and 110B (generally referred to as "110"), where each chamber array 110 of FIG. 6 may extend axially along the axial centerline 30 (or alternatively in a circumferential direction). Each chamber array 110 includes a plurality of the outer core chambers 104.

The chamber sidewalls 108 of FIGS. 5 and 6 may be arranged parallel with one another. The chamber sidewalls 108 are spaced laterally (e.g., circumferentially) from one another so as to respectively form the outer core chambers 104 laterally between the chamber sidewalls 108. Each of the chamber sidewalls 108 thereby respectively forms lateral peripheral sides of the outer core chambers 104 in at least one of the chamber arrays 110. Each intermediate sidewall 108 (e.g., 1081) (e.g., a chamber sidewall 108 laterally disposed between two other chamber sidewalls 108), for example, forms the lateral peripheral sides of the respective outer core chambers 104 in a first of the chamber arrays 110 (e.g., 110A) as well as the lateral peripheral sides of the respective outer core chambers 104 in a second of the chamber arrays 110 (e.g., 110B) that laterally neighbors (e.g., is immediately adjacent, next to) the first of the chamber arrays 110 (e.g., 110A). Each intermediate sidewall (e.g., 1081) is located laterally between the respective laterally neighboring pair of chamber arrays 110 (e.g., the first and second chamber arrays 110A and 110B). Each intermediate sidewall (e.g., 1081) may therefore fluidly separate the outer core chambers 104 in the respective laterally neighboring pair of chamber arrays 110 (e.g., 110A and 110B) from one another.

Referring to FIG. 5, each of the chamber sidewalls 108 extends vertically between and to the intermediate layer 84 and the outer skin 83. Each of the chamber sidewalls 108 may also be connected (e.g., bonded and/or otherwise attached) to the intermediate layer 84 and/or the outer skin 83. Each of the chamber sidewalls 108 may be orientated substantially perpendicular to the intermediate layer 84 and the outer skin 83.

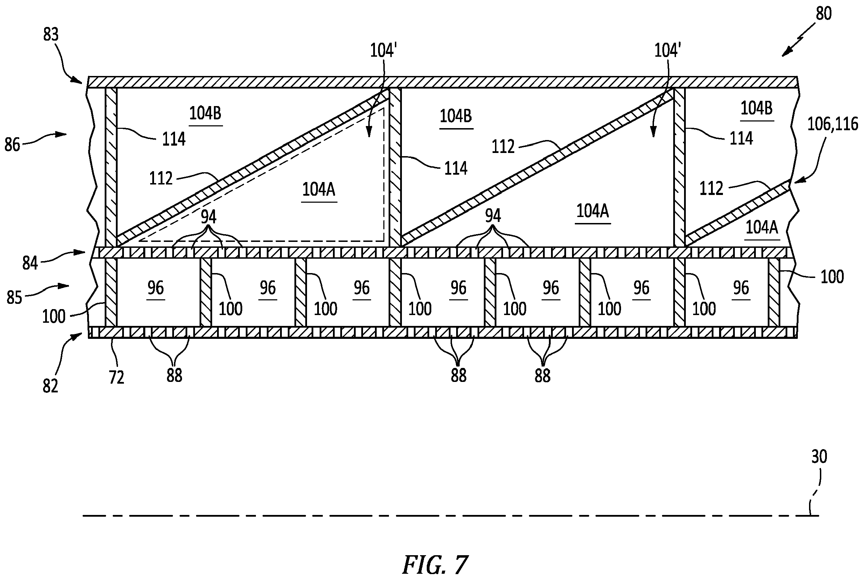

Each corrugated structure 106 of FIGS. 3 and 6 includes one or more first panels 112 (e.g., members, segments, etc.) and one or more second panels 114 (e.g., members, segments, etc.). These corrugated structure panels 112 and 114 are arranged together and are interconnected (e.g., in a zig-zag pattern) to provide a corrugated ribbon 116; e.g., a longitudinally elongated corrugated panel, layer, body, etc. The first panels 112 of FIG. 3 are configured as baffles; e.g., fluid impermeable (e.g., non-perforated) segments of the corrugated ribbon 116. The second panels 114 of FIG. 3 are configured as septums; e.g., fluid permeable (e.g., perforated) segments of the corrugated ribbon 116. Each of these second panels 114, for example, includes one or more panel perforations 118; e.g., apertures such as through-holes. Each of these panel perforations 118 extends through the respective second panel 114. However, referring to FIG. 7, one or more or all of the second panels 114 may alternatively each be configured as another baffle; e.g., another fluid impermeable (e.g., non-perforated) segment of the corrugated ribbon 116.

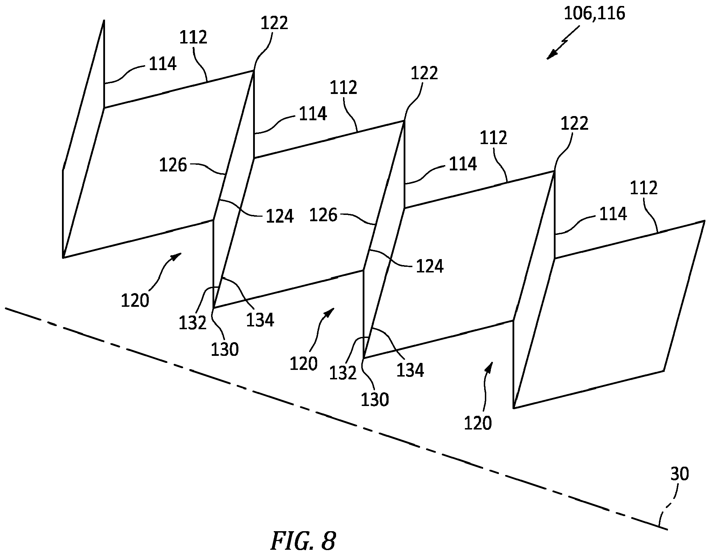

Referring to FIG. 8, the first panels 112 (e.g., the baffles) and the second panels 114 (e.g., the septums) are arranged together into a longitudinally extending linear array to provide the respective corrugated ribbon 116. The first panels 112 are interspersed with the second panels 114. Each first panel 112 (unless configured at a longitudinal end of the chamber sidewall 108; see FIG. 6), for example, is disposed and may extend longitudinally between and to a respective longitudinally neighboring pair of the second panels 114. Similarly, each second panel 114 (unless configured at a longitudinal end of the chamber sidewall 108; see FIG. 6) is disposed and may extend longitudinally between and to a respective longitudinally neighboring pair of the first panels 112.

The corrugated structure 106 of FIG. 8 includes one or more corrugations 120. Each of these corrugations 120 includes a longitudinally neighboring pair of the first and second panels 112 and 114.

Referring to FIG. 3, within the same corrugation 120, each first panel 112 is connected to and may meet a respective second panel 114 at a peak 122 adjacent the outer skin 83. Each first panel 112, for example, extends to a first end 124 thereof. Each second panel 114 extends to a first end 126 thereof. Each first panel first end 124 is (e.g., directly) connected to the first end 126 of the second panel 114 in the same corrugation 120 at the outer skin peak 122; see also FIG. 8. The first panel 112 is angularly offset from the respective second panel 114 by an included angle 128; e.g., an acute angle. This outer skin peak angle 128 of FIG. 3, for example, may be between twenty degrees (20°) and seventy degrees (70°); e.g., thirty degrees (30°), forty-five degrees (45°), seventy degrees (70°). The present disclosure, however, is not limited to such an exemplary outer skin peak angle.

Each first panel 112 is connected to and may meet the second panel 114 in a longitudinally neighboring corrugation 120 at a peak 130 adjacent the intermediate layer 84. Each first panel 112, for example, extends to a second end 132 thereof. Each second panel 114 extends to a second end 134 thereof. Each first panel second end 132 is (e.g., directly) connected to the second end 134 of the second panel 114 in the longitudinally neighboring corrugation 120 at the intermediate layer peak 130; see also FIG. 8. The first panel 112 is angularly offset from the respective second panel 114 by an included angle 136; e.g., an acute angle. This intermediate layer peak angle 136 may be equal to or otherwise complementary with the outer skin peak angle 128. The intermediate layer peak angle 136 of FIG. 3, for example, may be between twenty degrees (20°) and seventy degrees (70°); e.g., thirty degrees (30°), forty-five degrees (45°), seventy degrees (70°). The present disclosure, however, is not limited to such an exemplary intermediate layer peak angle.

Each corrugation 120 at its outer skin peak 122 radially engages (e.g., contacts) and may be connected (e.g., bonded and/or otherwise attached) to the outer skin 83. Each first panel 112 is angularly offset from the outer skin 83 by an outer skin-first panel included angle 138; e.g., an acute angle. The outer skin-first panel included angle 138 of FIG. 3, for example, may be between twenty degrees (20°) and seventy degrees (70°); e.g., thirty degrees (30°), forty-five degrees (45°), seventy degrees (70°). Each second panel 114 is angularly offset from the outer skin 83 by an outer skin-second panel included angle 140; e.g., a right angle. The present disclosure, however, is not limited to such exemplary angles. For example, in other embodiments, the outer skin-second panel included angle 140 may be an acute angle.

Each corrugation 120 at one or each of its intermediate layer peaks 130 radially engages (e.g., contacts) and may be connected (e.g., bonded and/or otherwise attached) to the intermediate layer 84. Each first panel 112 is angularly offset from the intermediate layer 84 by an intermediate layer-first panel included angle 142; e.g., an acute angle. The intermediate layer-first panel included angle 142 of FIG. 3, for example, may be between twenty degrees (20°) and seventy degrees (70°); e.g., thirty degrees (30°), forty-five degrees (45°), seventy degrees (70°). Each second panel 114 is angularly offset from the intermediate layer 84 by an intermediate layer-second panel included angle 144; e.g., right angle. The present disclosure, however, is not limited to such exemplary angles. For example, in other embodiments, the intermediate layer-second panel included angle 144 may be an acute angle.

With the foregoing configuration, each corrugated structure 106 and each of its corrugations 120 extend across a radial height 146 of the outer cellular core 86 between the outer skin 83 and the intermediate layer 84. Each corrugated structure 106 may thereby divide the one or more outer core chambers 104 within a respective chamber array 110 into one or more first sub-chambers 104A (e.g., cavities) and one or more corresponding second sub-chambers 104B (e.g., cavities). The first sub-chambers 104A of FIG. 3 are located within the outer cellular core 86 on an inner side (e.g., intermediate layer side) of the respective corrugated structure 106. The second sub-chambers 104B are located within the outer cellular core 86 on an outer side (e.g., outer skin side) of the respective corrugated structure 106.

Each of the first sub-chambers 104A of FIG. 3 is fluidly coupled with a respective one of the second sub-chambers 104B through the respective panel perforations 118. Each respective set of fluidly coupled sub-chambers 104A and 104B collectively forms a respective one of the outer core chambers 104 within the outer cellular core 86. Each outer core chamber 104 of FIG. 3 extends diagonally (e.g., radially and longitudinally) from the outer skin 83, along a respective neighboring pair of the first panels 112 and through a respective second panel 114 (via the respective panel perforations 118), to the intermediate layer 84. Each outer core chamber 104 of FIG. 3 extends longitudinally (e.g., axially), along each of the acoustic panel elements 83, 84 and 108, between and to the respective neighboring pair of the first panels 112. Each outer core chamber 104 of FIG. 5 extends laterally (e.g., circumferentially), along each of the first and the second panels 112 and 114, between and to a respective neighboring pair of the chamber sidewalls 108.

With the foregoing configuration, the respective outer core chamber 104 of FIG. 3 may have a length 148 within the outer cellular core 86 that is longer than the outer core height 146. This may facilitate tuning the outer cellular core 86 and, more generally, the acoustic panel 80 for attenuating sound (e.g., noise) with relatively low frequencies without changing (e.g., proportionally increasing) an overall radial height 149 of the acoustic panel 80 as may be required via a traditional acoustic panel only with a honeycomb core.

Each of the outer core chambers 104 of FIG. 3 has a first outer core chamber sectional geometry (e.g., shape, size, etc.) when viewed in a first outer core chamber reference plane (e.g., the plane of FIG. 3), which plane may be parallel with (e.g., co-planar with) the first inner core chamber reference plane described above. The first outer core chamber sectional geometry may have a polygonal shape; e.g., a parallelogram shape (see dashed line box). Referring to FIG. 6, each of the outer core chambers 104 has a second outer core chamber sectional geometry (e.g., shape, size, etc.) when viewed in a second outer core chamber reference plane, which plane may be perpendicular to the first outer core chamber reference plane and/or parallel with (but, radially spaced from) the second inner core chamber reference plane described above. This second outer core chamber sectional geometry may have a polygonal shape; e.g., a rectangular shape (see dashed line box). The present disclosure, however, is not limited to foregoing exemplary outer cellular core configuration. Furthermore, various other types of cellular cores for an acoustic panel are known in the art, and the present disclosure is not limited to any particular ones thereof.

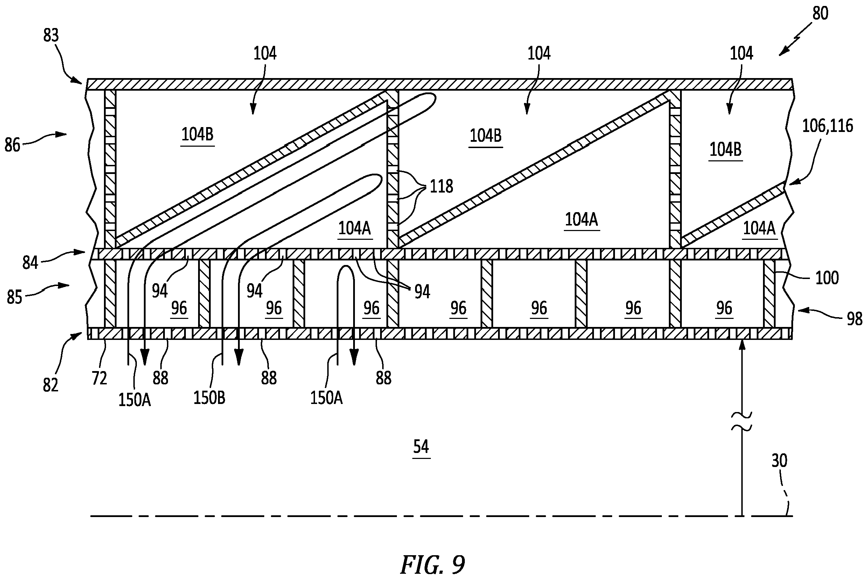

The acoustic panel 80 of FIG. 9 is configured as a multi-degree of freedom (MDOF) acoustic panel. Sound waves entering the acoustic panel 80, for example, may follow a plurality of trajectories 150A-C (generally referred to as "150"), select examples of such trajectories 150 are schematically illustrated. These trajectories 150 are included to depict which chambers / sub-chambers are involved, rather than depicting specific sound wave paths. The sound waves, of course, may also follow one or more additional trajectories not shown in FIG. 9. For example, one or more additional sound wave trajectories may exist due to interactions between the chambers / sub-chambers that produce additional reflections.

The first trajectory 150A extends away from the respective inner skin perforations 88, is reversed by the intermediate layer 84 (e.g., a septum layer), and extends back to the respective inner skin perforations 88. The second trajectory 150B extends away from the respective inner skin perforations 88 and through the respective intermediate layer perforations 94, is reversed by the respective corrugated structure 106 (e.g., solid, non-interrupted portion(s) of the respective second panel 114), and extends back through the respective intermediate layer perforations 94 to the respective inner skin perforations 88. The third trajectory 150C extends away from the respective inner skin perforations 88 and sequentially through the respective intermediate layer perforations 94 and the respective panel perforations 118, is reversed by the outer skin 83, and extends back sequentially through the respective panel perforations 118 and the respective intermediate layer perforations 94 to the respective inner skin perforations 88. With such an arrangement, the acoustic panel 80 may reverse phase of a plurality of different frequencies of the sound waves using known acoustic reflection principles and subsequently direct the reverse phase sound waves out of the acoustic panel 80 through the inner skin perforations 88 to destructively interfere with other incoming sound waves; e.g., noise waves.

One or more or all of the outer cellular core components 106 and 108 may be formed from metal. Each of the corrugated structures 106, for example, may be formed from a piece of machined (e.g., cut) and formed (e.g., bent, folded, pressed, etc.) sheet metal. Similarly, each of the chamber sidewalls 108 may be formed from a piece of machined and formed sheet metal.

Referring to FIG. 2, the nozzle fairing 77 is configured as another face and/or exterior skin for the exhaust nozzle 50. The nozzle fairing 77 of FIG. 2, more particularly, is configured to form at least a portion or an entirety of the nozzle outer surface 74. The nozzle fairing 77, for example, may be formed from a relatively thin sheet or layer of (e.g., continuous, uninterrupted and/or non-porous) material; e.g., sheet metal. This nozzle fairing 77 of FIG. 2 extends axially along the axial centerline 30 between and to (or about) the panel upstream end 90 and the nozzle downstream end 70. The nozzle fairing 77 may thereby (e.g., completely) axially overlap the acoustic panel 80 of FIG. 2. The nozzle fairing 77 extends circumferentially about (e.g., completely around) the axial centerline 30 as well as the acoustic panel 80 of FIG. 2.

The nozzle mounting structure 78 of FIG. 2 is configured to support the exhaust nozzle 50 at the nozzle upstream end 68. The nozzle mounting structure 78 is also configured for mounting the exhaust nozzle 50 and its components to another stationary structure of the propulsion system housing 32; e.g., the inner case 48 of FIG. 1. The nozzle mounting structure 78 extends circumferentially about (e.g., completely around) the axial centerline 30, which may provide the nozzle mounting structure 78 with an annular or tubular body. The nozzle mounting structure 78 of FIG. 2 includes a (e.g., annular) support ring 152 and a (e.g., annular) mounting ring 154. The support ring 152 may be abutted axially against the panel upstream end 90, and arranged radially between the inner skin 82 and the outer skin 83. The support ring 152 may be connected (e.g., bonded and/or otherwise attached) to the inner skin 82, the outer skin 83 and/or one or more other components 84-86 of the acoustic panel 80. The mounting ring 154 is disposed at (e.g., on, adjacent or proximate) the nozzle upstream end 68. This mounting ring 154 of FIG. 2 includes a flange 156 for securing (e.g., mechanically fastening) to the other stationary structure of the propulsion system housing 32; e.g., the inner case 48 of FIG. 1.

The nozzle trailing edge body 79 of FIG. 2 is configured to support (e.g., provide a frame for) the exhaust nozzle 50 at the nozzle downstream end 70. The nozzle trailing edge body 79 is also configured to form a (e.g., annular) trailing edge 158 of the exhaust nozzle 50. The nozzle trailing edge body 79 extends circumferentially about (e.g., completely around) the axial centerline 30, which may provide the nozzle trailing edge body 79 with an annular or tubular body. A mounting portion of the nozzle trailing edge body 79 is arranged radially between the inner skin 82 and the outer skin 83. The nozzle trailing edge body 79 is connected (e.g., bonded and/or otherwise attached) to the inner skin 82 and the outer skin 83. The nozzle fairing 77 of FIG. 2 is also connected (e.g., bonded and/or otherwise attached) to the nozzle trailing edge body 79 (or the inner structure 76).

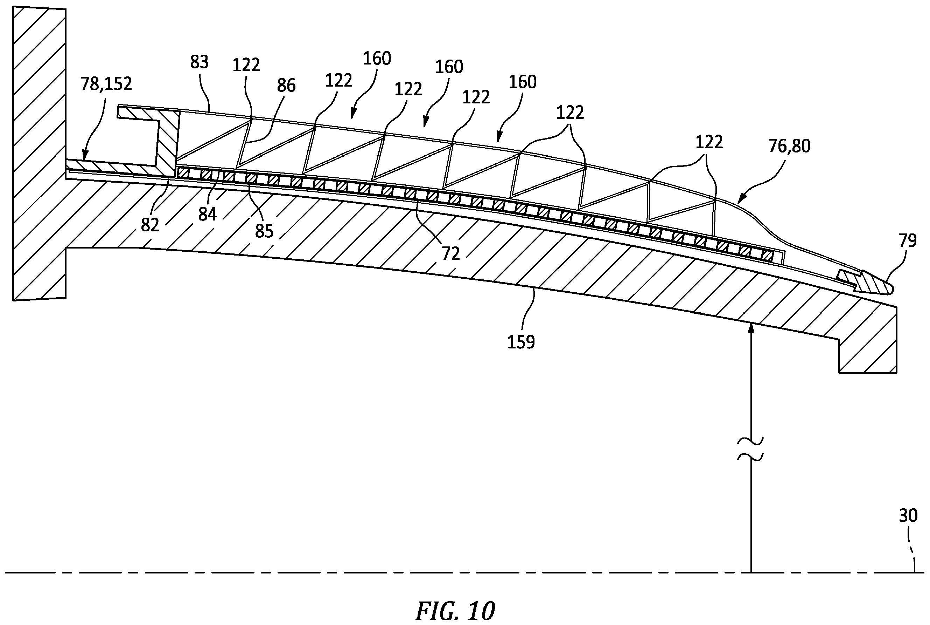

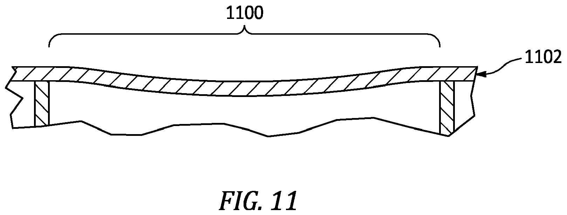

Referring to FIG. 10, at least some of the exhaust nozzle components (e.g., 82-86, 76, 78-80 and 152) may be arranged with (e.g., on) an exhaust nozzle mandrel during manufacture of the exhaust nozzle 50. These exhaust nozzle components (e.g., 82-86, 76, 78-80 and 152) may be connected together using, for example, a welding operation, a brazing operation and/or any other suitable bonding operation. Referring to FIG. 11, during such a bonding operation, relatively large unsupported regions 1100 of a skin 1102 may slightly dimple and/or otherwise deform. The outer skin 83 of FIG. 10, for example, may slightly dimple and/or otherwise deform in regions 160 between neighboring outer skin peaks 122. Such deformation, however, may not adversely affect exhaust nozzle performance and/or exhaust nozzle appearance since the outer skin 83 of FIG. 2 is (e.g., completely or substantially) covered by the nozzle fairing 77 that forms the nozzle outer surface 74. Of course, a thickness may be sized (e.g., increased) to reduce or prevent deformation. The inner skin 82 of FIG. 10, by contrast, may not be subject to dimpling or other such deformations since the corrugated sidewalls 100 (see FIGS. 3 and 5) are located close together and, thus, provide additional structural support for the inner skin 82. In other words, the inner skin 82 includes relatively small unsupported regions between the neighboring corrugated sidewalls 100 as compared to the outer skin 83. The inner skin 82 therefore may be subject to relatively little or no surface distortions during the bonding of the exhaust nozzle components; e.g., 82-86, 76, 78-80 and 152. The configuration of the exhaust nozzle 50 of FIG. 2 may thereby facilitate low frequency (e.g., deep cavity) sound attenuation while also maintaining smooth aerodynamic flow surfaces; e.g., the surface 72.

In some embodiments, referring to FIG. 7, one or more or all of the second panels 114 may each be configured as another baffle; e.g., another fluid impermeable (e.g., non-perforated) segment of the corrugated ribbon 116. Each second panel 114 of FIG. 7 thereby fluidly decouples (e.g., separates, divides, etc.) the respective inner and outer sub-chambers 104A and 104B. With such an arrangement, each outer core chamber 104' (e.g., the sub-chamber 104A) of FIG. 7 extends radially between and to the intermediate layer 84 and the respective first panel 112. Each outer core chamber 104' (e.g., the sub-chamber 104A) of FIG. 7 extends longitudinally (e.g., axially) between the respective neighboring first and second panels 112 and 114. The first outer core chamber sectional geometry of FIG. 7 may thereby have a triangular shape (see dashed line box) rather than a parallelogram shape as in the embodiments of FIG. 3.

While the acoustic panel 80 is described above as part of the exhaust nozzle 50, the acoustic panel 80 of the present disclosure is not limited to such an exemplary application. The acoustic panel 80 of the present disclosure, for example, may be configured for sound attenuation in other structures of the aircraft propulsion system 20. Furthermore, the acoustic panel 80 and its components are not limited to the specific materials and/or construction techniques described above.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An apparatus for an aircraft propulsion system (20), comprising:
a first skin (82);
a second skin (83);
an intermediate layer (84) between the first skin (82) and the second skin (83);
a first cellular core (85) between and connected to the first skin (82) and the intermediate layer (84), the first cellular core (85) comprising a plurality of first core chambers (96), and a first of the plurality of first core chambers (96) fluidly coupled with one or more first perforations (88) in the first skin (82) and one or more first perforations (94) in the intermediate layer (84); and
a second cellular core (86) between and connected to the intermediate layer (84) and the second skin (83), the second cellular core (86) comprising a plurality of second core chambers (104) and a plurality of corrugations (106), a first of the plurality of second core chambers (104) fluidly coupled with the first of the plurality of first core chambers (96) through the one or more first perforations (94) in the intermediate layer (84), a first of the plurality of corrugations (106) comprising a first panel (112) and a second panel (114), the first of the plurality of corrugations (106) connected to the second skin (83) at an interface between the first panel (112) and the second panel (114), the first panel (112) connected to the intermediate layer (84) at a first location, and the second panel (114) connected to the intermediate layer (84) at a second location.

2. The apparatus of claim 1, wherein
the first panel (112) is angularly offset from the second skin (83) by an acute angle (138); and
the second panel (114) is angularly offset from the first panel (112) at the interface by an acute angle (128, 136).

3. The apparatus of claim 1 or 2, wherein the second panel (114) is angularly offset from the second skin (83) by a right angle.

4. The apparatus of any preceding claim, wherein
the first panel (112) is configured as a non-perforated panel; and
the second panel (114) is configured as either a perforated panel or a non-perforated panel.

5. The apparatus of any preceding claim, wherein:
the first of the plurality of second core chambers (104) extends between the intermediate layer (84) and the second panel (114); and/or
the second panel (114) extends across and divides the first of the plurality of second core chambers (104) into a pair of fluidly coupled sub-chambers (104A).

6. The apparatus of any preceding claim, wherein
a second of the plurality of first core chambers (96) is fluidly coupled with one or more second perforations (88) in the first skin (82) and one or more second perforations (94) in the intermediate layer (84); and
the first of the plurality of second core chambers (104) is fluidly coupled with the second of the plurality of first core chambers (96) through the one or more second perforations (94) in the intermediate layer (84).

7. The apparatus of claim 6, wherein
a third of the plurality of first core chambers (96) is fluidly coupled with one or more third perforations (88) in the first skin (82) and one or more third perforations (94) in the intermediate layer (84); and
the first of the plurality of second core chambers (104) is fluidly coupled with the third of the plurality of first core chambers (96) through the one or more third perforations (94) in the intermediate layer (84).

8. The apparatus of any preceding claim, wherein the first cellular core (85) comprises a honeycomb core.

9. The apparatus of any preceding claim, wherein
the first of the plurality of first core chambers (96) is configured with a first chamber sectional geometry in a first chamber reference plane;
the first of the plurality of second core chambers (104) is configured with a second chamber sectional geometry in a second chamber reference plane that is parallel with the first chamber reference plane; and
the second chamber sectional geometry is different than the first chamber sectional geometry.

10. The apparatus of claim 9, wherein:
the first chamber sectional geometry comprises a rectangular shape and the second chamber sectional geometry comprises either a triangular shape or a parallelogram shape; or
the first chamber sectional geometry comprises a hexagonal shape and the second chamber sectional geometry comprises a rectangular shape.

11. The apparatus of any preceding claim, further comprising:
an acoustic panel (80) comprising the first skin (82), the second skin (83), the intermediate layer (84), the first cellular core (85) and the second cellular core (86);
the acoustic panel (80) extending circumferentially about an axial centerline (30); and
the first skin (82) forming a radial inner surface (72) of the acoustic panel (80).

12. The apparatus of any preceding claim, further comprising:
an exhaust nozzle (50) comprising the first skin (82), the second skin (83), the intermediate layer (84), the first cellular core (85) and the second cellular core (86); and, optionally
a fairing (77) extending circumferentially about and axially overlapping the second skin (83).

13. An apparatus for an aircraft propulsion system (20), comprising:
a first skin (82);
a second skin (83);
an intermediate layer (84) between the first skin (82) and the second skin (83);
a first cellular core (85) between and connected to the first skin (82) and the intermediate layer (84), the first cellular core (85) comprising a plurality of first core chambers (96), a first of the plurality of first core chambers (96) fluidly coupled with one or more first perforations (88) in the first skin (82) and one or more first perforations (94) in the intermediate layer (84), and the first of the plurality of first core chambers (96) configured with a first chamber shape in a first chamber reference plane; and
a second cellular core (86) between and connected to the intermediate layer (84) and the second skin (83), the second cellular core (86) comprising a plurality of second core chambers (86), a first of the plurality of second core chambers (86) fluidly coupled with the first of the plurality of first core chambers (96) through the one or more first perforations (88) in the intermediate layer (84), and the first of the plurality of second core chambers (86) configured with a second chamber shape in a second chamber reference plane that is parallel with the first chamber reference plane, wherein the second chamber shape is different than the first chamber shape.

14. The apparatus of claim 13, wherein
the second cellular core (86) further comprises a plurality of corrugations (106);
a first of the plurality of corrugations (106) comprises a first panel (112) and a second panel (114), and the first of the plurality of corrugations (106) is connected to the second skin (83) at an interface between the first panel (112) and the second panel (114);
the first panel (112) is connected to the intermediate layer (84) at a first location; and
the second panel (114) is connected to the intermediate layer (84) at a second location that is spaced from the first location.

15. An apparatus for an aircraft propulsion system (20), comprising:
an exhaust nozzle (50) extending circumferentially about and axially along an axial centerline (30), the exhaust nozzle (50) comprising an inner skin (82), an outer skin (83), an intermediate layer (84), a first cellular core (85) and a second cellular core (86);
the first cellular core (85) radially between and connected to the inner skin (82) and the intermediate layer (84), the first cellular core comprising a first core configuration with a plurality of first core chambers (96), a first of the plurality of first core chambers (96) fluidly coupled with one or more first perforations (88) in the inner skin (82) and one or more first perforations (94) in the intermediate layer (84); and
the second cellular core (86) radially between and connected to the intermediate layer (84) and the outer skin (83), the second cellular core (86) comprising a second core configuration with a plurality of second core chambers (104), the second core configuration different than the first core configuration, and a first of the plurality of second core chambers (104) fluidly coupled with the first of the plurality of first core chambers (96) through the one or more first perforations (94) in the intermediate layer (84).
